# NEUE EUROPÄISCHE PATENTSCHRIFT

(11) **EP 0 736 445 B2**
(45) Veröffentlichungstag und Bekanntmachung des Hinweises auf die Entscheidung über den Einspruch: **02.05.2003**
(45) Hinweis auf die Patenterteilung: 09.09.1998
(21) Anmeldenummer: 96103036.8
(22) Anmeldetag: 29.02.1996
(51) Int. Cl.: B62D 65/00, B62D 33/06

(54) **Fahrerhaus eines Frontlenker-Lastkraftwagen**
Driver's cab for cab-over-engine lorries
Cabine de conduite pour camions à cabine avancée

(30) Priorität: 07.04.1995 DE 19513089
(43) Veröffentlichungstag der Anmeldung: 09.10.1996
(73) Patentinhaber: MAN Nutzfahrzeuge Aktiengesellschaft, 80976 München (DE)
(72) Erfinder: Rieck, Gerhard, Dipl.-Ing., 81247 München (DE); Kneifel, Eberhard, Dipl.-Ing., 80639 München (DE); Koch, Erich, 85757 Karlsfeld (DE); Watzek, Gerhard, Dipl.-Ing., 80935 München (DE)

(56) Entgegenhaltungen:
- EP-A- 0 327 415
- EP-A- 0 374 488
- EP-B- 0 374 975
- WO-A-92/07749
- DE-C- 3 617 961
- GB-A- 626 361
- US-A- 4 391 465
- PATENT ABSTRACTS OF JAPAN vol. 008, no. 234 (M-334), 26.Oktober 1984 & JP-A-59 114175 (ISUZU JIDOSHA KK;OTHERS: 03), 2.Juli 1984,

## Beschreibung

Die Erfindung betrifft ein Fahrerhaus eines Frontlenker-Lastkraftwagens mit Merkmalen entsprechend dem Oberbegriff des Patentanspruches 1.

Die Erfindung geht aus von der WO 92/07749 A1. Hieraus ist es bekannt, das Fahrerhaus eines Frontlenker-Lastkraftwagens aus zwei vorgefertigten und vormontierten Modulen - einem Frontmodul und einem Teilhausmodul - zusammenzusetzen. Dabei basiert der Teilhausmodul auf einem nach vorne offenen, ohne Frontwand und nur aus Seitenwänden, Rückwand, Dach und Boden zusammengesetzten Rahmen, der nach seiner Lackierung mit An- und Einbauten vervollständigt wird. Der Frontmodul weist als Basis eine Frontwand auf, die als Systemträger fungierend nach Rohform-Herstellung und Lackierung durch Anbau zumindest eines Großteils aller im vorderen Fahrerhausbereich angeordneten Fahrzeugteile und Aggregate ergänzt wird. Die bei dieser bekannten Lösung als Basis im Frontmodul fungierende Frontwand ist schalenförmig ausgebildet, mit von der Stirnseite nach hinten gezogenen Seiten- und Dachwangen, was vergleichsweise große, komplizierte und teure Preßwerkzeuge erfordert. Diese scheibenfömige Frontwand geht mithin vom Boden bis zum Dach hoch und bildet auch einen kompletten einteiligen Rahmen für die darin eingesetzte Windschutzscheibe.

Demgegenüber ist es Aufgabe der Erfindung, ein Fahrerhaus der gattungsgemäßen Art unter Beibehaltung des modularen Bauprinzipes so abzuwandeln, daß der Frontmodul einfacher und billiger herstellbar ist und außerdem eine bessere Zugänglichkeit für eine günstigere und schnellere Montage seiner Ein- und Anbauteile sowie anschließend eine einfache und schnelle Überprüfbarkeit derselben auf Funktionstüchtigkeit ermöglicht.

Diese Aufgabe ist bei einem Fahrerhaus der gattungsgemäßen Art erfindungsgemäß durch Merkmale, wie im Kennzeichen des Patentanspruches 1 angegeben, gelöst.

Die erfindungsgemäße Lösung schafft gegenüber der eingangs diskutierten bekannten Lösung ein entschieden günstigeres Modulbauprinzip für das Fahrerhaus, weil die Trennlinie der beiden Module etwa in Höhe der Brüstungslinie im Bereich des Windschutzscheiben-Aufnahmerahmens gegeben ist. Diese Aufteilung ermöglicht es, beide Module getrennt voneinander herzustellen, diese anschließend miteinander zu verbinden und dann erst die Windschutzscheibe einzukleben. Der Teilhausmodul wird dabei durch ein Teilrohhaus ohne Frontwand gebildet, das hergestellt, dann lackiert und anschließend mit jenen An- und Einbauteilen ergänzt wird, die üblicherweise im Anschluß an den Armaturenbrettbereich im hinteren 2/3-Raum des Fahrerhauses, vorne bei Fahrer- und Beifahrersitz beginnend, gegeben sind. Dabei gewährleistet der Teilhausmodul mit seinem nach vorne offenen, aber schon lackierten Rohhaus optimale Montagemöglichkeiten für dessen Innenausstattungsteile, dann durch die frontseitige Öffnung können die sperrigen Ausstattungsteile wie Schlafliegen und Sitze ebensogut wie kleinere Teile ins Rohhaus-Innere eingebracht und dort montiert werden. Das Montagepersonal kann so auch von vorne her bestimmte Arbeiten durchführen.

Die erfindungsgemäß etwa im Bereich der Brüstungslinie gegebene Trennung von Teilhausmodul und Frontmodul ermöglicht es besonders vorteilhaft, eine vergleichsweise kleine Frontwand zu verwenden, die innerhalb des Frontmoduls als Basis und Systemträger für Anbauteile sowie als Windschutzscheiben-Aufnahmerahmen-Unterteil fungiert. Diese Frontwand ist mit kostengünstigen Werkzeugen herstellbar und nach ihrer Lackierung - weil rundum zugänglich - auch schnell und einfach mit den Anbauteilen bestückbar. Außerdem ist die Funktion der an der Frontwand angebauten Teile bzw. Aggregate wegen der guten Zugänglichkeit schnell und sicher überprüfbar.

Beide Teilmodule ergänzen sich erfindungsgemäß so, daß sich erst nach ihrem Zusammenbau ein umlaufender Aufnahmerahmen ergibt, in den die Windschutzscheibe einklebbar ist. Die großflächige Windschutzscheibe ist daher vor ihrem Einbau niemandem im Weg und auch keiner Gefahr etwaiger Beschädigungen ausgesetzt.

Zusammenfassend ist daher festzustellen, daß das erfindungsgemäße Fahrerhaus-Konzept optimale ergonomische Verhältnisse für die Herstellung der beiden Teilmodule, deren Zusammenfügung und die Anbringung der Windschutzscheibe schafft, ebenso eine nennenswerte Zeit- und Kostenersparnis erbringt sowie Montage- bzw. Einbaufehler minimiert.

Ein weiterer Vorteil der erfindungsgemäßen Lösung besteht darin, daß der Frontmodul eine standardisierte Baugruppe bilden kann, die mit einem hinsichtlich seiner Längen- und Höheabmessungen variablen Teilhausmodul verbunden werden kann. Das bedeutet, mit einem einzigen Typ von Frontmodul lassen sich kurze oder lange Fahrerhäuser sowohl in Normaldach- als auch Hochdach- oder Topsleeper-Version darstellen.

Vorteilhafte Ausgestaltungen und Weiterbildungen der erfindungsgemäßen Lösung sind in den Unteransprüchen angegeben.

Nachstehend ist die Erfindung anhand eines in der Zeichnung dargestellten Ausführungsbeispieles näher erläutert. In der Zeichnung zeigen:

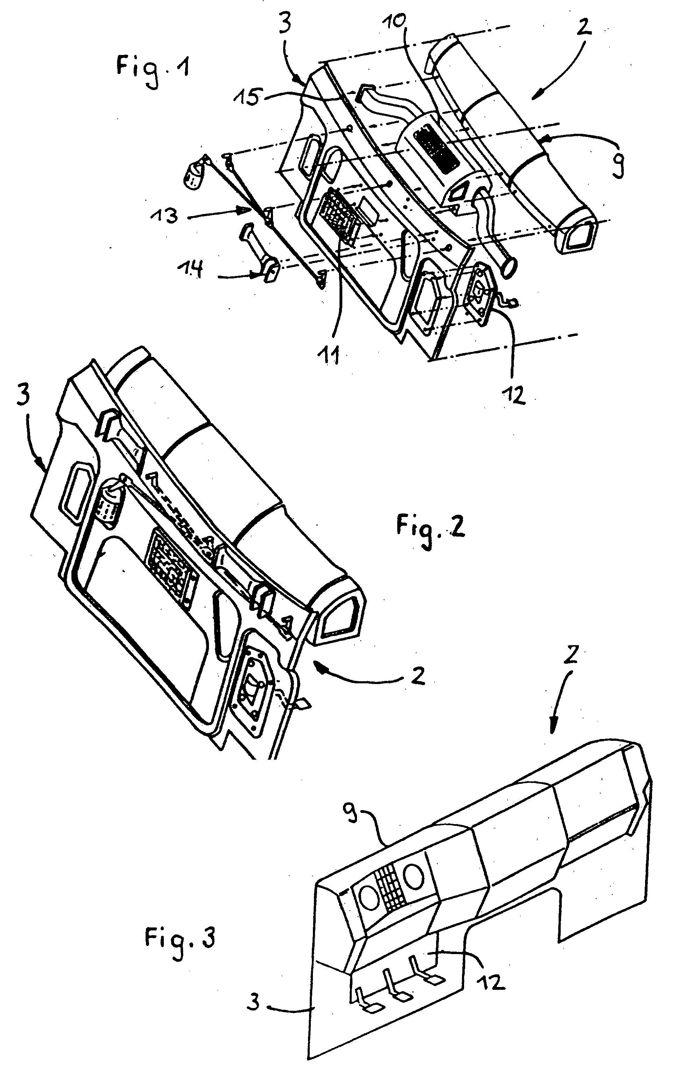

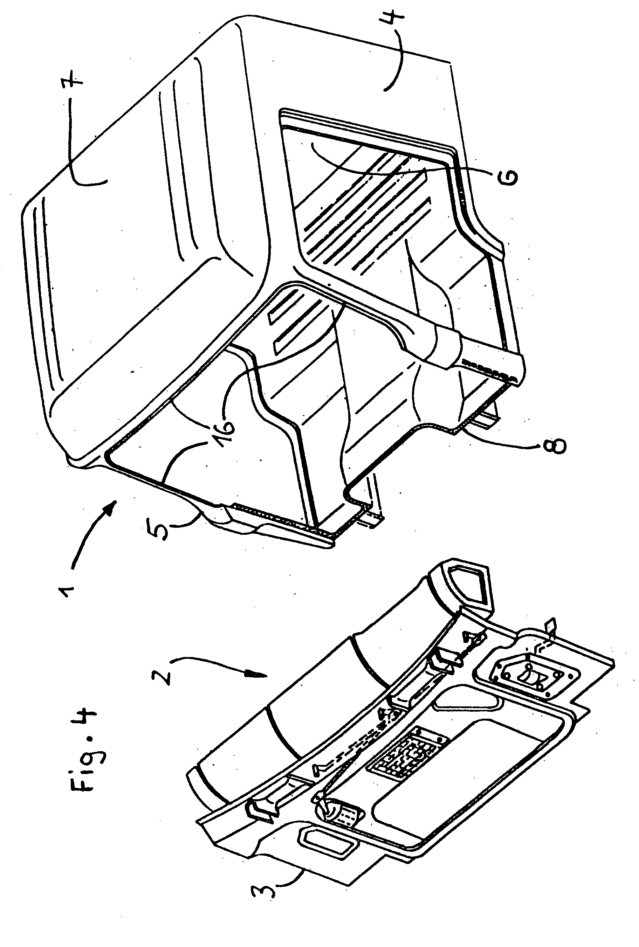

- Fig. 1: den die Frontwand beinhaltenden Frontmodul, in perspektivischer Explosionsdarstellung seiner Teile vor Zusammenbau,
- Fig. 2: den Frontmodul nach seinem Zusammenbau perspektivisch von vorn,
- Fig. 3: den Frontmodul nach seinem Zusammenbau perspektivisch von hinten,
- Fig. 4: in perspektivischer Darstellung rechts den Teilhausmodul und links davor den vormontierten Frontmodul, und

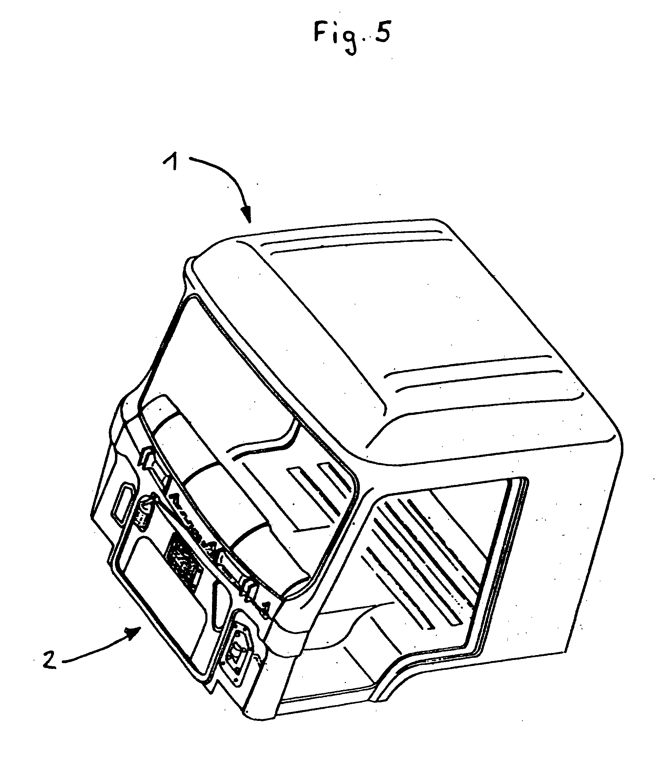

- Fig. 5: den Frontmodul angebaut am Teilhausmodul.

Das Fahrerhaus eines Frontlenker-Lastkraftwagens erfindungsgemäßer Bauart setzt sich aus zwei unabhängig voneinander vorgefertigten und vormontierten Modulen zusammen, nämlich einem Teilhausmodul 1 und einem Frontmodul 2. Der Teilhausmodul 1 basiert auf einem nach vorne offenen, ohne Frontwand 3 und nur aus den Seitenwänden 4, 5, Rückwand 6, Dach 7 und Boden 8 zusammengestzten Rohhaus, das anschließend lackiert und mit Ein- und Anbauten vervollständigt wird. In der Zeichnung ist vom Teilhausmodul 1 der Übersichtlichkeit wegen nur das Rohhaus ohne Ein- und Anbauten dargestellt. Bei diesen An- und Einbauten handelt es sich um Fahrer- und Beifahrersitz, Schlafliegen, Schränke, Ablagen, Vorhänge, Schalthebel, Seiten- und Rückfenster (soweit vorgesehen), Fahrer- und Beifahrertür. Wie aus der Zeichnung gut ersichtlich, ist das vorn offene Rohhaus zur Montage der Innenausstattungsteile sehr gut für das Montagepersonal zugänglich, was sowohl für die Einbringung der Teil ins Innere als auch deren dortige Anbringung und Befestigung gilt.

Der Frontmodul 2 weist als Basis die Frontwand 3 auf. Diese fungiert innerhalb des Frontmoduls 2 als tragendes Strukturelement und als Systemträger, denn nach Herstellung ihrer Rohform und ihrer Lackierung wird die Frontwand 3 durch Anbau zumindest eines Großteils aller im vorderen Fahrerhausbereich angeordneten Fahrzeugteile und Aggregate ergänzt. Bei diesen Anbauteilen, die an der Frontwand 3 direkt oder indirekt über geeignete Befestigungsorgane oder an als Halterungen dienenden Versteifungsorganen angeordneten Bauteilen/Aggregaten handelt es sich um
- das Armaturenbrett einschließlich aller Instrumente, Schalter uns sonstiger An- und Einbauteile,
- Heizungs-/Klima-Anlage samt Bedienungsorganen,
- Kalt- und Warmluftführungen bzw. -kanäle,
- Filtersysteme 11 für Kalt- und Warmluftreinigung,
- Pedalerie 12,
- Elektrik und Elektronik,
- Kabelbäume,
- Scheibenwischeranlage 13,
- Warmwasser- und Kühlmittelleitungen,
- Frontklappenscharniere 14,
- Lenkungsteile,
- diverse Ventile und Behälter, z. B. für Scheiben- und Scheinwerferreinigungsflüssigkeit.

Da die Frontwand 3 somit innerhalb des Frontmoduls 2 eine nicht unerhebliche Tragfunktion hat, ist sie als Strukturelement auszubilden und zu versteifen, was durch gezielte preßtechnisch hergestellte Verrippungen und/oder zusätzlich angebrachte partielle Aufdoppelungen oder zusätzlich angebrachte Versteifungsträger und/oder Versteifungsprofile geschehen kann.

Nach dem Anbau der Teile bzw. Aggregate an der Frontwand 3 kann deren Funktion, weil eine leichte Zugänglichkeit gegeben, auf einfache Weise und schnell überprüft werden. Danach ist dieser solcherart vormontierte Frontmodul 2 fertig für Aufbau am ebenfalls bereits vormontierten Teilhausmodul 1. Für gute Einpassung in letzteren weist die Frontwand 3 seitlich speziell gestaltete Wandabschnitte bzw. Anschlußorgane sowie hinten speziell ausgebildete Randabschnitte auf, solcherart, daß die Frontwand 3 exakt in den entsprechend angepaßt vorbereiteten vorderen Freiraum zwischen den beiden Seitenwänden 4, 5 des Teilhausmoduls 1 eingepaßt montierbar und dort abgedichtet befestigbar ist.

Die die Basis des Frontmoduls 2 bildende Frontwand 3 erstreckt sich von der Brüstungslinie an abwärts und weist obenendig einen Teilabschnitt 15 des Windschutzscheiben-Aufnahmerahmens auf. Dieser Teilabschnitt 15 ergänzt den restlichen, am Teilhausmodul 1, dort an den beiden Seitenwänden 4, 5 im Bereich der A-Säulen und dem Dach 7 gegebenen Abschnitt 16 des Windschutzscheiben-Aufnahmerahmens, derart, daß die (nicht dargestellte) Windschutzscheibe nach Anbau des Frontmoduls 2 am Teilhausmodul 1 direkt im dann vollständig gegebenen Aufnahmerahmen 15, 16 einklebbar ist.

Vorzugsweise hat der Frontmodul 2 nach seiner Montage am Teilhausmodul 1 innerhalb der Fahrerhaus-Gesamtstruktur eine versteifende und verstärkende Funktion.

Die Erfindung beschränkt sich nicht auf die in der Zeichnung dargestellte Ausführungsform, sondern läßt im Rahmen der erfindungsgemäßen Lehre eine Reihe von Variierungen an den beiden Modulen 1 und 2 sowohl hinsichtlich deren Ausgestaltung als auch Verbindung miteinander zu.

## Patentansprüche

1. Fahrerhaus eines Frontlenker-Lastkraftwagens, das aus zwei vorgefertigten und vormontierten Modulen - einem Teilhausmodul (1) und einem Frontmodul (2) - zusammengesetzt ist, wobei der Teilhausmodul (1) auf einem nach vorne offenen, ohne Frontwand (3) und nur aus Seitenwänden (4, 5), Rückwand (6), Dach (7) und Boden (8) zusammengesetzten Rohhaus basiert, das anschließend lackiert und mit Ein- und Anbauten vervollständigt wird, und wobei der Frontmodul (2) als Basis die Frontwand (3) aufweist, die als Systemträger fungierend nach Rohform-Herstellung und Lackierung durch Anbau zumindest eines Großteils aller im vorderen Fahrerhausbereich angeordneten Fahrzeugteile und Aggregate ergänzt wird, **dadurch gekennzeichnet, daß** am Teilhausmodul (1), dort an den Seitenwänden (4, 5) im Bereich der A-Säulen und dem Dach (7), ein Teilabschnitt des Windschutzscheiben-Aufnahmerahmens (15, 16) gegeben ist, und daß die die Basis des Frontmoduls (2) bildende Frontwand (3) sich von der Brüstungslinie abwärts erstreckt und obenendig einen Teilabschnitt (15) des Windschutzscheiben-Aufnahmerahmens (15, 16) aufweist, der den restlichen, am Teilhausmodul (1) gegebenen Abschnitt (16) des Windschutzscheiben-Aufnahmerahmens (15, 16) ergänzt, derart, daß die Windschutzscheibe nach Anbau des Frontmoduls (2) am Teilhausmodul (1) im dann vollständig gegebenen Aufnahmerahmen (15, 16) einklebbar ist.

2. Fahrerhaus nach Anspruch 1, **dadurch gekennzeichnet, daß** die innerhalb des Frontmoduls (2) das tragende Strukturelement bildende Frontwand (3) in sich versteift ist durch gezielte preßtechnisch hergestellte Verrippungen und/oder zusätzlich angebrachte partielle Aufdoppelungen und/oder zusätzlich angebrachte Versteifungsträger und/oder -profile.

3. Fahrerhaus nach einem der vorhergehenden Ansprüche, **dadurch gekennzeichnet, daß** die die Basis des Frontmoduls (2) bildende Frontwand (3) als Träger für folgende, direkt oder indirekt über geeignete Befestigungsorgane oder an als Halterungen dienenden Versteifungsorganen angeordnete Bauteile/Aggregate dient, nämlich
- Armaturenbrett (9) einschließlich aller Instrumente, Schalter uns sonstiger An- und Einbauteile,
- Heizungs-/Klima-Anlage(10) samt Bedienungsorganen,
- Kalt- und Warmluftführungen/-Kanäle,
- Filtersysteme (11),
- Pedalerie (12),
- Elektrik und Elektronik,
- Kabelbäume,
- Scheibenwischeranlage (13),
- Warmwasser- und Kühlmittelleitungen,
- Frontklappenscharniere (14),
- Lenkungsteile,
- diverse Ventile,
- verschiedene Behälter.

4. Fahrerhaus nach einem der vorhergehenden Ansprüche, **dadurch gekennzeichnet, daß** die innerhalb des Frontmoduls (2) das tragende Strukturelement bildende Frontwand (3) seitlich speziell gestaltete Wandabschnitte bzw. Anschlußorgane sowie hinten speziell ausgebildete Randabschnitte aufweist, solcher Art, daß die Frontwand (3) exakt in den entsprechend angepaßt vorbereiteten vorderen Freiraum zwischen den beiden-Seitenwänden (4, 5) des Teilhausmoduls (1) eingepaßt montierbar und dort befestigbar ist.

## Claims

1. Cab of a forward-control truck, composed of two prefabricated and. preassembled modules - a part-cab module (1) and a front module (2) - the part-cab module (1) being based on a cab shell which is open towards the front, is without front wall (3), consists only of side walls (4, 5), a rear wall (6), a roof (7) and a floor (8) and is subsequently painted and completed with installations and attachments, the front module (2) having as its base the front wall (3) which acts as a system carrier and, after manufacturing of the shell and painting, is completed with the attachment of at least a large number of all those vehicle parts and units which are arranged in the front cab area, **characterised in that** a section of the windscreen mounting frame (15, 16) is provided on the part-cab module (1), namely on the side walls (4, 5) in the area of the A-posts and the roof (7), and that the front wall (3) forming the base of the front module (2) extends from the chord line downwards and is, at its upper end, provided with a section (15) of the windscreen mounting frame (15, 16) which complements the remaining section (16) of the windscreen mounting frame (15, 16), provided on the part-cab module (1), in such a way that after attachment of the front module (2) to the part-cab module (1) the windscreen can then be glued into place in the then complete mounting frame (15, 16).

2. Cab according to Claim 1, **characterised in that** the front wall (3) forming the supporting structural element within the front module (2) is reinforced in itself by means of ribs purposefully made by pressing and/or by means of additional partial double-layer-type reinforced portions and/or by means of additionally attached reinforcing members and/or reinforcing sections.

3. Cab according to one of the foregoing Claims, **characterised in that** the front wall (3) forming the base for the front module (2) acts as a carrier for the following components/units arranged directly or indirectly via suitable fastening organs or on reinforcing organs serving as holders, namely
• the instrument panel (9) including all instruments, switches and other add-on and installation parts,
• the heating/air-conditioner (10) including the operating elements,
• cold and hot-air ducting/channels,
• filter systems (11),
• the pedals (12),
• the electrics and electronics,
• cable harnesses,
• the windscreen wiper system (13),
• hot-water and coolant lines,
• front-flap hinges (14),
• steering parts,
• various valves,
• various reservoirs.

4. Cab according to one of the foregoing Claims, **characterised in that** the front wall (3) forming the supporting structural element within the front module (2) features specially designed wall sections and/or connecting organs on the sides and specially designed edge sections at the rear so that the front wall (3) can be exactly inserted into the pre-adapted clear space between the two side walls (4, 5) of the part-cab module (1) and can be fastened there.

## Revendications

1. Cabine d'un camion à cabine avancée, composée de deux modules préfabriqués et prémontés - un module de cabine partielle (1) et un module avant (2), - auquel cas le module de cabine partielle (1) est basé sur une cabine brute ouverte sur. le devant, sans paroi avant (3) et composée uniquement des parois latérales (4, 5), de la paroi arrière (6), du pavillon (7) et du plancher (8), est ensuite mise en peinture et complétée par des éléments de montage et d'adaptation, et auquel cas le module avant (2) a pour base la paroi avant (3) qui est complétée, après fabrication de la paroi brute et mise en peinture, par l'adaptation d'au moins une grande partie de toutes les pièces du véhicule et tous les organes mécaniques disposés dans la partie avant de la cabine, et fait office de support de système, **caractérisée en ce qu'**une découpe du cadre d'appui du pare-brise (15, 16) existe au niveau du module de cabine partielle (1), sur les parois latérales (4, 5) au niveau des colonnes A et du pavillon (7), et que la paroi avant (3) formant la base du module avant (2) s'étend de la ligne d'appui du pare-brise vers le bas et présente au niveau de la partie supérieure une découpe (15) du cadre d'appui du pare-brise (15, 16), qui complète la découpe du cadre d'appui du pare-brise (15, 16) restante et existante sur le module de cabine partielle (1) de telle manière que le pare-brise puisse être collé, après le montage du module avant (2) sur le module de cabine partielle (1), sur le cadre d'appui (15, 16) complet.

2. Cabine selon la revendication 1, **caractérisée en ce que** la paroi avant (3) formant l'élément de structure porteur du module avant (2) est renforcée intérieurement par des nervures et/ou des doublements partiels montés en supplément et/ou des supports et/ou des profilés rigides montés en supplément.

3. Cabine selon l'une des revendications énoncées précédemment, **caractérisée en ce que** la paroi avant (3) formant la base du module avant (2) sert de support pour les composants/organes mécaniques cités ci-après, disposés directement ou indirectement au dessus des organes de fixations appropriés ou au niveau des organes de renforcement servant de support, à savoir
- Tableau de bord (9), y compris tous les instruments, les contacteurs et autres pièces d'adaptation et de montage,
- Système de chauffage et de climatisation (10) ainsi que tous les organes de commande,
- Conduites/canaux d'air froid et chaud,
- Systèmes de filtration (11),
- Pédalier (12)
- Circuits électrique et électronique,
- Faisceaux de câblage,
- Dispositif d'essuie-glace du pare-brise (13),
- Conduites d'eau chaude et de liquide de refroidissement,
- Charnières du portillon avant (14),
- Pièces de la direction,
- Diverses vannes,
- Divers réservoirs

4. Cabine selon l'une des revendications énoncées précédemment, **caractérisée en ce que** la paroi avant (3) formant l'élément de structure porteur du module avant (2) présente des découpes de paroi et des pièces de raccordement conçues spécialement sur le côté ainsi que des découpes sur les bords élaborées spécialement à l'arrière de telle manière que la paroi avant (3) puisse être montée par encastrement et fixée à cet endroit dans l'espace libre avant préparé et adapté en conséquence entre les deux parois latérales (4, 5) du module de cabine partielle (1).
